(19) Europäisches Patentamt
European Patent Office
Office européen des brevets

(11) EP 1 295 888 A1

(12) EUROPEAN PATENT APPLICATION

(43) Date of publication:
**26.03.2003 Bulletin 2003/13**

(51) Int Cl.[7]: **C07F 7/18**, C09D 5/16, C08F 4/42

(21) Application number: **01203581.2**

(22) Date of filing: **21.09.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **SIGMA COATINGS B.V.**
**1422 AD Uithoorn (NL)**

(72) Inventors:
- **Plehiers, Mark**
  **1000 Bruxelles (BE)**
- **Vos, Marcel**
  **1400 Nivelles (BE)**
- **Gillard, Michel**
  **1348 Louvain-la-Neuve (BE)**

(74) Representative: **Walsh, David Patrick et al**
**Appleyard Lees,**
**15 Clare Road**
**Halifax HX1 2HY (GB)**

# (54) Process for the preparation of trialkylsilylated carboxylate monomers, the obtained trialkylsilylated carboxylate monomers and their use in antifouling coatings

(57) Process for the preparation of trialkylsilylated carboxylate monomers of general formula (**I**)

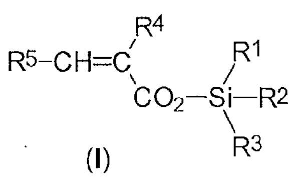

(**I**)

wherein
$R^1$, $R^2$, $R^3$ each independently represent an alkyl or an aryl group,
$R^4$ represents a hydrogen atom or a methyl group or $-CH_2$-COOSi$R^1R^2R^3$ wherein $R^1$, $R^2$, $R^3$ are as already defined,
$R^5$ represents a hydrogen atom, an alkyl group or $-COOR^6$ wherein $R^6$ represents an alkyl group or Si$R^1R^2R^3$ wherein $R^1R^2R^3$ are as already defined,
which process comprises the steps of reacting:

an acyloxysilane of formula (**II**)

$$R^7\text{-COO-Si}R^1R^2R^3 \quad \text{(II)}$$

wherein
$R^1$, $R^2$, and $R^3$ are as already defined above and,
$R^7$ is a hydrogen atom, a $C_1$-$C_3$ alkyl group, a partially or totally hydrogenated $C_1$-$C_3$ alkyl group
with an unsaturated carboxylic acid of formula (**III**),

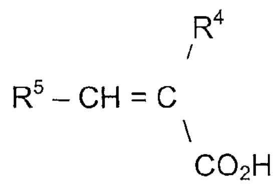

(**III**)

wherein
$R^4$ is a hydrogen atom or a methyl group or $CH_2COOH$ and,
$R^5$ has the same meaning as that defined above.

EP 1 295 888 A1

## Description

Field of the invention

The invention relates to a new method for the chemical preparation of trialkylsilylated carboxylate monomers. The invention further relates to said obtained trialkylsilylated carboxylate monomers and in another aspect, the invention further relates to their use for the synthesis of hydrolysable polymers, such as binders for modern antifouling coatings.

Background

Antifouling paints are used to prevent and delay the fouling of underwater structures (e.g. ships' bottom, docks, fishnets, and buoys) by various marine organisms such as shells, seaweed, and aquatic bacteria. When such marine organisms adhere and propagate on an underwater structure like the bottom of a ship, the surface roughness of the whole ship may be increased to induce decrease of velocity of the ship or increase of fuel consumption. Further, removal of such aquatic organisms from the ship's bottom needs much labour and a long period of working time. In addition, if these organisms adhere and propagate on an underwater structure such as a steel structure and deteriorates their anticorrosive coating films, the strength or the function of the underwater structure may be lowered and thereby extremely reduce the lifetime of the underwater structure.

Underwater structures are therefore coated with antifouling paint with excellent antifouling properties. The new antifouling paints employ polymers containing various hydrolysable groups and more specifically organosilyl groups.

Amongst those antifouling paints is for example, an antifouling paint of the hydrolysable self-polishing type proposed in WO 8402915 and JP 63215780 which employs a methacrylic ester polymer having triorganosilyl group in side chains or a similar polymer. Other examples of patents and patent applications related to the use of organosilyl acrylate polymers in antifouling compositions are EP 131626, US 4593055, US 4594 365, JP 63118381, EP 0775733, WO 9638508, JP 11116257, EP 802243, EP 0714957, JP 07018216, JP 01132668, JP 05077712, JP 01146969 and US 4957989 and hereby incorporated by reference.

Some of the polymers used in the above described antifouling paints are based on silylated carboxylate monomers.

Several processes are known as conventional techniques for the synthesis of said silylated carboxylate monomers.

JP 5306290 describes a process to obtain a methacrylic functional group- containing organosilicon compound. The process comprises reacting methacrylic acid with a halogenoalkylsilane (e.g. trialkylsilylchloride) in the presence of a tertiary amine compound having a cyclic structure. This process may have disadvantages such as the reduced availability and storage stability of the silyl chloride. Moreover, the reaction yields as a by-product a hydrogen halide (which provokes the corrosion of the production equipment) or a halide salt (which has to be removed by filtration).

The synthesis of trimethylsilyl methacrylate from methacrylic acid and hexamethyldisilazane is described in A.Chapman & A.D.Jenkins J.Polym.Sci. Polym.Chem.Edn. vol 15, p.3075 (1977).

JP 10195084 discloses the reaction of unsaturated carboxylic acid such as acrylic acid or methacrylic acid with a trialkylsilylhydride compound in the presence of a copper catalyst. One of the disadvantages of this method is the risk of hydrogenation of the unsaturated carboxylic acid due to a side reaction of the produced $H_2$ on the carbon-carbon double bond.

Therefore, an object of the present invention is to provide a novel process capable of readily preparing trialkylsilylated carboxylate compounds in a high yield from easily available starting materials and offering an improvement vis-à-vis of the disadvantages disclosed above.

Another object of the present invention is to provide for a more direct method for the synthesis of such trialkylsilylated carboxylate compounds, with a more suitable reaction, easy work-up procedures and straightforward purification steps.

Trialkylsilylcarboxylates of aliphatic carboxylic acids can be obtained by transesterification. H.H.Anderson et al. describe in J.Org.Chem 1716 (1953) the reactions of triethyl silyl acetates with halogenated propionic acids and in J.Org. Chem. 1296 (1954) the reactions of trifluoro silyl acetates or propionates with chloroacetic acid; they distil the acetic or propionic acid under reduced pressure.

Russian chemists (Izv.Akad.Nauk.Ussr.Ser.Khim. 968 (1957)) run similar reactions at much higher temperatures (190-210°C).

JP 95070152 discloses reactions of trialkylsilylacetates with C6 to C30 carboxylic acids (e.g. palmitic, myristic, benzoïc,...); the acetic acid is distilled under reduced pressure or azeotropically with hexane.
S.Kozuka et al. in Bull.Chem.Soc.Jap. 52 (7) 1950 (1979) study the kinetics of acyloxy exchange reaction between acyloxysilanes and carboxylic acids.

The rate of the reaction has been found to proceed faster with a stronger attacking acid and a more basic leaving acyloxy group.

The present invention is based on the use of unsaturated carboxylic acids with acyloxysilane to synthetize trialkylsilylated carboxylate monomers. The use of unsaturated carboxylic acids in this reaction was unexpected as it is well known by the man of the art that the unsaturated carboxylic acids are polymerisable and lead to very low rate of reaction.

The present inventor has surprisingly found that by reacting acyloxysilane with unsaturated carboxylic acids weaker than the leaving acyloxy group, trialkylsilylated carboxylate monomers could be synthetised.

Summary of the invention

The present invention relates to a new process for the preparation of trialkylsilylated carboxylate monomers of general formula (**I**)

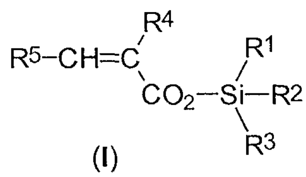

(**I**)

wherein

$R^1$, $R^2$, $R^3$ each independently represent an alkyl or an aryl group,
$R^4$ represents a hydrogen atom or a methyl group or $-CH_2-COOSiR^1R^2R^3$ wherein $R^1$, $R^2$, $R^3$ are as already defined,
$R^5$ represents a hydrogen atom, an alkyl group or $-COOR^6$ wherein $R^6$ represents an alkyl group or $SiR^1R^2R^3$ wherein $R^1R^2R^3$ are as already defined,

which process comprises the steps of reacting:

an acyloxysilane of formula (**II**)

$$R^7\text{-COO-SiR}^1R^2R^3 \qquad (\mathbf{II})$$

wherein
$R^1$, $R^2$, and $R^3$ are as already defined above and,
$R^7$ is a hydrogen atom, a $C_1$-$C_3$ alkyl group, a partially or totally hydrogenated $C_1$-$C_3$ alkyl group

with an unsaturated carboxylic acid of formula (**III**),

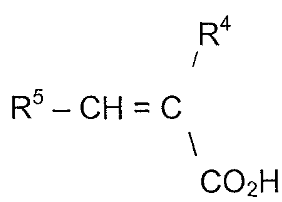

(**III**)

wherein
$R^4$ is a hydrogen atom or a methyl group or $CH_2COOH$ and,
$R^5$ has the same meaning as that defined above.

In a preferred embodiment $R^1$, $R^2$, $R^3$ and $R^6$ each independently represent a linear, branched or cyclic alkyl

group, saturated or unsaturated, containing from 1 to 12 carbon atoms, preferably from 1 to 6 carbon atoms, more preferably from 1 to 4 carbon atoms, yet more preferably 4 carbon atoms. More preferably, $R^1$, $R^2$, $R^3$ each independently are chosen from the group of methyl, ethyl, propyl, isopropyl, n-butyl, t-butyl, phenyl or substituted phenyl. Yet in a more preferred embodiment $R^1$, $R^2$, $R^3$ are n-butyl or isopropyl.

In another embodiment when $R^5$ is $-COOR^6$, the trialkylsilylated carboxylates of general formula (**I**) and the unsaturated carboxylic compound (**III**) can be of either cis (maleic) or trans (fumaric) configuration.

In a more preferred embodiment the trialkylsilylated carboxylates obtained by the process of the invention are trialkylsilyl acrylates or trialkylsilyl methacrylates.

The present invention will be further disclosed in detail hereunder. Examples will further support the description.

Detailed description of the invention

The present invention relates to a new process for the synthesis of trialkylsilylated carboxylates according to the general scheme :

$$R^5\text{-}CH{=}C(R^4)COOH + R^7\text{-}COO\text{-}SiR^1R^2R^3 \rightarrow R^5\text{-}CH{=}C(R^4)COOSiR^1R^2R^3 + R^7COOH$$

Unsaturated carboxylic acid represented by the above formula (**III**) is mixed with acyloxysilane with or without solvent.

The reaction is preferably set up such as each mole of acyloxysilane is treated with one mole of unsaturated carboxylic acid. Examples of solvent which can be used in the process according to the invention include hexane, toluene or xylene. A preference is given for a solvent which causes no distillation of one or both of the reactants. A much preferred solvent includes a solvent making a low boiling azeotrope with the distilled acid. The reaction may be conducted with or without added polymerisation inhibitor. The reaction progress may be monitored by any suitable analytical method as well as with the determination of the amount of acid distilled.

Examples of unsaturated carboxylic acids which can be used in the process according to the invention include acrylic acid, methacrylic acid, crotonic acid, angelic acid, tiglic acid, maleic acid, fumaric acid, itaconic acid (methylenesuccinic acid), more preferably, acrylic acid and methacrylic acid, and the mono-esters of the diacids, such as e.g. mono-butyl maieate, monoethyl fumarate.

The acyloxysilanes of general formula $R^7\text{-}COO\text{-}SiR^1R^2R^3$ which can be used in the process according to the invention are derived from carboxylic acids $R^7\text{-}COOH$ having a boiling point of maximum 162°C, preferably of maximum 140°C, more preferably of maximum 120°C in order to facilitate the removal of the product after the transesterification. Examples are formic acid, acetic acid, propionic acid, butyric acid. Formic acid and acetic acid with respectively 100°C and 118°C as boiling point are preferably used.

In another embodiment of the invention the acyloxysilanes are derived from partially or totally halogenated acids as defined hereabove, preferably from fluorinated or chlorated acid, more prferably from trifluoroacetic acid, with 72°C as boiling point.

Because of the wider availability of trialkylsilylacetates, these products are most preferred for the process of this invention

These acyloxysilanes are known (see table) or (for higher alkyl groups on the silicium) can be obtained by known methods. Some examples are given in the table :

| Acyloxysilane | CAS registry number |
|---|---|
| Trimethylsilyl formiate | 18243-21-5 |
| Trimethylsilyl acetate | 2754-27-0 |
| Triethylsilyl acetate | 5290-29-9 |
| Trimethylsilyl trifluoroacetate | 400-53-3 |
| Tri-n-propylsilyl acetate | 17315-26-3 |
| Tri-n-butylsilyl acetate | 22192-48-9 |
| Trimethylsilyl propionate | 16844-98-7 |
| Trimethysilyl trichloroacetate | 25436-07-1 |

Examples of the trialkylsilylated carboxylate monomers prepared by the process of the invention using (meth) acrylic acid include trimethylsilyl (meth)acrylate, triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-s-butylsilyl (meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)acrylate, tribenzylsilyl (meth)acrylate, tri t-butylsilyl (meth) acrylate.

Other examples include ethyldimethylsilyl methacrylate, n-butyldimethylsilyl methacrylate, bis(trimethylsilyl) itaconate, t-butyl dimethylsilyl methacrylate diisopropyl-n-butylsilyl methacrylate, n-octyldi-n-butylsilyl methacrylate, diisopropylstearylsilyl methacrylate, dicyclohexylphenylsilyl methacrylate, t-butyldiphenylsilyl methacrylate, phenyldimethylsilyl methacrylate and lauryldiphenylsilyl methacrylate.

Examples of trialkylsilylated carboxylate monomers of general formula (**I**) wherein $R^5$ is the ester of the above-described formula (**III**) include triisopropylsilyl methyl maleate, triisopropylsilyl amyl maleate, tri-n-butylsilyl n-butyl maleate, t-butyldiphenylsilyl methyl maleate, t-butyldiphenylsilyl n-butyl maleate, triisopropylsilyl methyl fumarate, triisopropylsilyl amyl fumarate, tri-n-butylsilyl n-butyl fumarate, t-butyldiphenylsilyl methyl fumarate, and t-butyldiphenylsilyl n-butyl fumarate.

The advantage of this invention is that the process use reactants which can be easily handled. Another advantage lies in the simplicity and safety of the procedure (no filtration of salt neither trapping of corrosive gaseous matter). Furthermore, another advantage is that the reaction takes place without any added catalyst and can be performed under reduced pressure. A further advantage is that the formed carboxylic acid may be removed under azeotropic distillation. Also there is no need to add polymerisation inhibitors and no degradation of the material occurs.

Due to its shortness, its easy work-up procedure and its high yield the process of the present invention can be considered as a substantial improvement over the existing methods described above.

The trialkylsilylated carboxylate monomers obtained by the process of the invention can be polymerised with various other monomers such as vinyl monomers including acrylic esters, methacrylic esters, styrene, vinyl esters (e. g., vinyl acetate, vinyl propionate, vinyl butyrate, vinyl benzoate), vinyltoluene, alpha -methylstyrene, crotonic esters, and itaconic esters.

The polymers and copolymers of said monomers are useful in coating or paint composition. More preferably they are used in antifouling coating or paint compositions. When used in a antifouling coating composition, they give a film which undergoes neither cracking nor peeling and shows moderate hydrolysability to dissolve into seawater constantly at an adequate rate and which therefore exhibits excellent antifouling property for long term.

The antifouling coating compositions prepared using the monomers obtained by the process of the invention are tin-free coatings and provide an alternative to the present self-polishing coating technology based on hydrolysable tributyltin polymers (use of which is due to be banned in antifouling paints by 2003). The trialkylsilylated carboxylate monomers provided by the process of the invention compared to organotin compounds are less toxic, less polar, more hydrophobic and more stable.

Hereunder examples are given. However it should be construed that the invention is in no way limited to those examples.

## Examples

In the following examples, NMR datas have been determined in CDCl3 and are expressed as delta versus TMS.

### Example 1

### Preparation of trimethylsilyl methacrylate

20 ml of acetoxytrimethylsilane and 11.4 ml of commercial methacrylic acid (ATOFINA Norsocryl® MAA) in 100 ml of hexane are mixed and heated. Azeotropic distillation of acetic acid affords trimethylsilyl methacrylate.

Trimethysilyl methacrylate: $^{13}$C NMR : 167.7, 137.6, 127.1, 18.2, -0.257 ; $^{29}$ Si NMR : 24.3; IR (film): 2963, 1703, 1335, 1256, 1178, 874, 854 $cm^{-1}$.

### Example 2

### Preparation of tri-n-butylsilyl methacrylate

4 g of acetoxytri-n-butylsilane and 1.33 g of commercial methacrylic acid (ATOFINA Norsocryl® MAA) are mixed at room temperature , acetic acid is then distilled under reduced pressure (45°C/13 HPa) to afford tri-n- butylsilyl

methacrylate.
Tri-n-butylsilyl methacrylate: $^{13}C$ NMR : 167.8, 137.9, 126.0, 26.7, 25.5, 18.5, 13.5, 14.0; $^{29}$ Si NMR : 23.1; IR (film): 2959, 2927, 1703, 1334, 1174, 886, 766.

While the invention has been described in detail and with reference to specific embodiments thereof, it will be apparent to one skilled in the art that various changes and modifications can be made therein without departing from the spirit and scope thereof.

## Claims

1. Process for the preparation of trialkylsilylated carboxylate monomers of general formula (**I**)

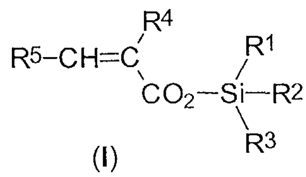

(**I**)

wherein

$R^1$, $R^2$, $R^3$ each independently represent an alkyl or an aryl group,
$R^4$ represents a hydrogen atom or a methyl group or $-CH_2-COOSiR^1R^2R^3$ wherein $R^1$, $R^2$, $R^3$ are as already defined,
$R^5$ represents a hydrogen atom, an alkyl group or $-COOR^6$ wherein $R^6$ represents an alkyl group or $SiR^1R^2R^3$ wherein $R^1R^2R^3$ are as already defined,

which process comprises the steps of reacting:

an acyloxysilane of formula (**II**)

$$R^7\text{-COO-SiR}^1R^2R^3 \qquad (\mathbf{II})$$

wherein
$R^1$, $R^2$, and $R^3$ are as already defined above and,
$R^7$ is a hydrogen atom, a $C_1$-$C_3$ alkyl group, a partially or totally hydrogenated $C_1$-$C_3$ alkyl group

with an unsaturated carboxylic acid of formula (**III**),

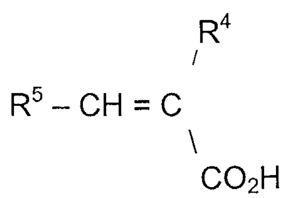

(**III**)

wherein

$R^4$ is a hydrogen atom or a methyl group or $CH_2COOH$ and,
$R^5$ has the same meaning as that defined above.

2. A process according claim 1, wherein $R^1$, $R^2$, $R^3$ and $R^6$ each independently represent a linear, branched or cyclic alkyl group, saturated or unsaturated, containing from 1 to 12 carbon atoms, preferably from 1 to 6 carbon atoms,

more preferably from 1 to 4 carbon atoms, yet more preferably 4 carbon atoms.

**3.** A process according to claim 2 wherein $R^1$, $R^2$, $R^3$ each independently are chosen from the group of methyl, ethyl, propyl, isopropyl, n-butyl, t-butyl, phenyl or substituted phenyl.

**4.** A process according to claim 3 wherin $R^1$, $R^2$, $R^3$ are n-butyl or isopropyl.

**5.** A process according to claim 1, wherein the unsaturated carboxylic acids of formula (III) is selected from the group of acrylic acid, methacrylic acid, crotonic acid, angelic acid, tiglic acid, maleic acid, fumaric acid, itaconic acid, preferably from acrylic and methacrylic acids.

**6.** A process according to claim 1, wherein the acyloxysilane of formula (II) is derived from carboxylic acids having a boiling point of maximum 162°C, preferably of maximum 140°C, more preferably of maximum 120°C.

**7.** Trialkylsilylated carboxylate monomers obtained by the process of any of claims 1 to 6.

**8.** Trialkylsilyl acrylates and trialkylsilyl methacrylates obtained by the process of any of claims 1 to 6

**9.** Use of a compound obtained by the process of any of claims 1 to 6 in the preparation of a hydrolysable polymer.

**10.** Use according to claim 9 in antifouling coating compositions.

European Patent Office

# EUROPEAN SEARCH REPORT

Application Number
EP 01 20 3581

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y<br><br><br><br><br><br><br><br><br>D | DATABASE CHEMICAL ABSTRACTS 'Online!<br>Chemical Abstracts, Columbus OH;<br>Abstract No. 129:175792,<br>FUJINO, J. ET AL.: "Preparation of polymerizable triorganosilyl unsaturated carboxylates"<br>XP002190783<br>* abstract *<br>& JP 10 195084 A (NITTO KASEI CO., LTD; NIPPON OIL AND FATS CO., LTD)<br>28 July 1998 (1998-07-28)<br>--- | 1-6 | C07F7/18<br>C09D5/16<br>C08F4/42 |
| D,Y | ANDERSON, H.H. ET AL.: "Ethylsilicon esters and transesterifications"<br>THE JOURNAL OF ORGANIC CHEMISTRY,<br>1953, pages 1716-1722, XP002190781<br>* the whole document *<br>--- | 1-6 | |
| D,X | EP 0 775 733 A (CHUGOKU MARINE PAINTS, LTD) 28 May 1997 (1997-05-28)<br>* the whole document *<br>--- | 7-10 | TECHNICAL FIELDS SEARCHED (Int.Cl.7) |
| D,T | KOZUKA, S. ET AL.: "kinetic studies for the acyloxy exchange reactions of acyloxytrimethylsilanes with carboxylic acids"<br>BULLETIN OF THE CHEMICAL SOCIETY OF JAPAN,<br>vol. 52, no. 7, 1979, pages 1950-1952,<br>XP002190782<br>* the whole document *<br>----- | 1-6 | C07F<br>C09D<br>C08F |

The present search report has been drawn up for all claims

| Place of search | Date of completion of the search | Examiner |
|---|---|---|
| THE HAGUE | 20 February 2002 | Rinkel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number

EP 01 20 3581

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

**LACK OF UNITY OF INVENTION SHEET B**

Application Number
EP 01 20 3581

The Search Division considers that the present European patent application does not comply with the requirements of unity of invention and relates to several inventions or groups of inventions, namely:

1. Claims: 1-6

   Process for the preparation of trialkylsilylated carboxylate monomers

2. Claims: 7,8

   Trialkylsilylated carboxylate monomers

3. Claims: 9,10

   Usee of trialkylsilylated carboxylate monomers

## ANNEX TO THE EUROPEAN SEARCH REPORT ON EUROPEAN PATENT APPLICATION NO. EP 01 20 3581

This annex lists the patent family membersrelating to the patent documents cited in the above-mentioned European search report.
The members are as contained in the European Patent Office EDP file on
The European Patent Office is in no way liable for these particulars which are merely given for the purpose of information.

20-02-2002

| Patent document cited in search report | Publication date | Patent family member(s) | Publication date |
|---|---|---|---|
| JP 10195084 A | 28-07-1998 | NONE | |
| EP 775733 A | 28-05-1997 | EP 0775733 A1 | 28-05-1997 |
| | | KR 235093 B1 | 15-12-1999 |
| | | KR 235094 B1 | 15-03-2000 |
| | | KR 235095 B1 | 15-03-2000 |
| | | NO 970404 A | 01-04-1997 |
| | | US 6110990 A | 29-08-2000 |
| | | WO 9638508 A1 | 05-12-1996 |
| | | JP 9048947 A | 18-02-1997 |
| | | SG 77187 A1 | 19-12-2000 |
| | | SG 77188 A1 | 19-12-2000 |
| | | US 6172132 B1 | 09-01-2001 |
| | | JP 9048946 A | 18-02-1997 |
| | | JP 9048948 A | 18-02-1997 |
| | | JP 9048949 A | 18-02-1997 |
| | | JP 9194790 A | 29-07-1997 |

EPO FORM P0459

For more details about this annex : see Official Journal of the European Patent Office, No. 12/82